# EUROPÄISCHE PATENTSCHRIFT

(11) **EP 0 529 272 B1**
(45) Veröffentlichungstag und Bekanntmachung des Hinweises auf die Patenterteilung: **25.01.1995**
(21) Anmeldenummer: 92112032.5
(22) Anmeldetag: 15.07.1992
(51) Int. Cl.: B65H 3/32, B65H 3/30

(54) **Einrichtung zur Aufnahme von biegeschlaffen flächigen Teilen**
Device for separating lim flat articles
Dispositif pour enlever des articles plats flexibles

(30) Priorität: 19.07.1991 DE 4124077
(43) Veröffentlichungstag der Anmeldung: 03.03.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hess, Frank-Jürgen, Dipl.-Ing., W-5883 Kierspe 1 (DE); Schreiber, Torsten, Dipl.-Ing., W-4600 Dortmund 1 (DE); Wollboldt, Frank, Dipl.-Ing., W-5860 Iserlohn (DE)

(56) Entgegenhaltungen:
- EP-A- 0 147 319
- EP-A- 0 353 527
- DE-A- 3 641 434
- DE-A- 3 835 032
- DE-A- 3 933 626

## Beschreibung

Die Erfindung betrifft eine Einrichtung zum Depalettieren und/oder Aufnahme von biegeschlaffen flächigen Teilen, insbesondere Säcken oder nicht mit Hilfsmitteln zusammengefaßten Sackbündeln gemäß dem Oberbegriff des Hauptanspruchs.

Eine solche Einrichtung ist aus der DE OS 38 35 032 bekannt. Die darin beschriebene Vorrichtung dient zum Entstapeln von blockweise gestapelten Zuschnitten aus Papier, Pappe, Karton, Kunststoff usw. Die einzelnen Zuschnittblocks werden dabei mittels eines Einstechwerkzeuges von ihrer jeweiligen Unterlage angehoben, wobei das Einstechwerkzeug unmittelbar vor dem Einstechvorgang zwecks exakter Positionierung auf der Unterlage abgestützt wird. Anschließend wird das Einstechwerkzeug in den Zuschnittsblock eingefahren. Ist der eine Zuschnittsblock abgehoben und abtransportiert, so fährt entweder die Vorrichtung zu einem nächsten Zuschnittsblock, oder dieser wird an die Stelle des bereits abtransportierten positioniert. Das Einstechwerkzeug ist durch eine nachgiebige Zunge gebildet, welche bei einem Entstapelvorgang zunächst auf einer festen Unterlage abgestützt und dabei gegenüber ihrer senkrechten Bewegungsrichtung verschwenkt werden muß. Damit die Zunge einfacher zwischen die Teile oder unter den Zuschnittsblock eindringen kann, wird Druckluft zwischen die einzelnen Teile geblasen, wodurch ein Eingriffsspalt für die Zunge gebildet wird.

Bei anderen bekannten Einrichtungen zum Depalettieren von biegeschlaffen Teilen ist die Greifereinheit meistens in Form eines Sauggreifers ausgestaltet. Die DE AS 25 49 264 offenbart eine Vorrichtung zum Vereinzeln von gestapelten Säcken, wobei die Säcke durch einen Sauger aufgenommen werden. Aus der DE OS 37 42 637 ist eine andere Vorrichtung zum vereinzelten Abnehmen von Leersäcken von einer Palette beschrieben. Die Greifereinheit ist auch bei dieser Vorrichtung in Form eines Saugers ausgebildet. Nach der DE PS 32 42 181 ist die Vorrichtung so ausgestaltet, daß die Kunststoffsäcke durch Ansaugen an einem Eckbereich angehoben werden, danach um etwa 90° verschwenkt und anschließend von dem darunter liegenden Sackstapel abgezogen. Allen diesen Einrichtungen ist das Vorhandensein eines Sauggreifers gemeinsam. Diese Einrichtungen eignen sich zum Vereinzeln von biegeschlaffen Teilen. Eine Stapelaufnahme bzw. eine Aufnahme von mehreren biegeschlaffen Teilen auf einmal ist mit diesen Einrichtungen nicht möglich. Dies ist nachteilig.

Daneben sind Einrichtungen bekannt, z.B. aus der DE OS 38 05 974, welche eine Aufnahme von Stapeln oder einzelnen biegeschlaffen Teilen erlauben. Dies geschieht so, daß Gabelzinken eines Gabelstaplers entweder die Palette, auf der die biegeschlaffen Teile angeordnet sind, oder die biegeschlaffen Teile selbst unterfahren und durch Anheben von dem darunter liegenden Stapel abheben und weiter transportieren. Diese Lösung ist dann besonders nachteilig, wenn die Teile in unterschiedlichen Stapelmustern gestapelt sind oder wenn die Teile so ausgestaltet sind, daß sie untereinander verhaken können, wie z.B. Ventilsäcke. Die Aufnahme von offenen, d.h. nicht mit Hilfsmitteln zusammengefaßten Stapeln ist überhaupt nicht möglich, da die Teile von den Gabelzinken einfach abrutschen.

Aufgabe der vorliegenden Erfindung ist es, eine gattungsgemäße Einrichtung so auszugestalten, daß bei einer gebrauchsvorteilhaften Bauform eine Aufnahme von biegeschlaffen flächigen Teilen sowohl einzeln als auch in offenen Stapeln sicher und präzise ermöglicht wird.

Diese Aufgabe ist durch die im Hauptanspruch angegebene Erfindung gelöst. Die Unteransprüche stellen vorteilhafte Weiterbildungen dar.

Die erfindungsgemäße Einrichtung weist eine Greifereinheit mit einem ersten Niederhalter, welcher auf die zu hebenden Teile aufgesetzt wird und einen zweiten Niederhalter, der auf die darunterliegenden Teile formschlüssig aufgesetzt wird, auf. Dadurch wird ein Eingriffsspalt für ein in dem zweiten Niederhalter angeordnetes Unterfahrelement geschaffen. Der zweite Niederhalter befindet sich während des gesamten Unterfahrvorganges des aufzunehmenden Stapelbündels bzw. der aufzunehmenden einzelnen Teile in einer formschlüssigen Verbindung zu den darunter liegenden Teilen. Da die Teile biegeschlaff, d.h. nachgiebig sind, bewirkt der Formschluß, daß ein Eingriffsspalt für das Unterfahrelement gebildet wird. Darüber hinaus wird dadurch erreicht, daß der untere Stapel seine Position beibehält und nicht einmal seine obersten Teile durch den Aufnahmevorgang des oberen Stapels mitbewegt werden. Nach dem Unterfahrvorgang werden die Teile durch einen auf diese aufsetzbaren Klemmzylinder und das Unterfahrelement gegriffen und aufgenommen. Der Eingriffsvorgang bzw. der Aufnahmevorgang des Stapelbündels erfolgt so, daß zunächst die beiden Niederhalter in eine formschlüssige Verbindung zu dem unteren und oberen Stapel gebracht werden und dadurch einen Eingriffsspalt für das nachgiebige Unterfahrelement bilden. Die Voraussetzung für die Bildung des Eingriffsspaltes ist, daß die biegeschlaffen Teile sich durch das Heranfahren der Niederhalter zusammendrücken lassen. Dabei kann in Abhängigkeit von der Beschaffenheit der aufzunehmenden biegeschlaffen Teile die Kraft mit der die Niederhalter die Teile zusammendrücken, gezielt gewählt werden, womit auch die Größe des Eingriffsspaltes bzw. der Verfahrweg der Niederhalter definiert werden kann. Befindet sich der zweite Niederhalter in einer formschlüssigen Verbindung zu dem unteren Stapel und ist der Eingriffsspalt geschaffen, so wird anschließend das in dem Niederhalter angeordnete und zu diesem aktiv bewegbare nachgiebige Unterfahrelement durch horizontale Bewegung in eine formschlüssige Verbindung zu dem unteren Stapel gebracht. Anschließend wird durch die weitere horizontale Bewegung des Unterfahrelementes das aufzunehmende Bündel unterfahren. Nach Abschluß des Unterfahrvorganges durch das nachgiebige Unterfahrelement wird auf die aufzunehmenden Teile ein Klemmzylinder abgesenkt und diese von oben an das Unterfahrelement angedrückt. Ist das Unterfahrelement als eine elastische Zunge ausgebildet, so wird das Teil/Bündel durch den Pneumatikzylinder an die in diesem Bereich ausreichend steife elastische Zunge gedrückt. So entsteht eine Klemmverbindung und die biegeschlaffen Teile können sicher gegriffen und aufgenommen werden.

Erfindungsgemäß sieht eine Ausführungsform vor, daß nach der Aufnahme des Stapelbündels die Greifereinheit eine solche Raumkurve beschreibt, daß die Relativbewegungen zwischen dem gegriffenen Teil bzw. den gegriffenen Teilen um dem darunter liegenden Stapel vermieden werden. Auf diese Weise ist gewährleistet, daß die unteren Teile nicht durch die an ihnen evtl. vorbeistreifenden, aufgenommenen Teile verschoben werden. Die Bewegung der Greifereinheit ist von der Länge der aufzunehmenden Teile abhängig, da die durch die Greifereinheit beschriebene Raumkurve um den Endpunkt der aufzunehmenden Teile gezogen wird. Weiterhin ist diese Raumkurve, die die Greifereinheit beschreiben muß, von dem Greifpunkt des Teiles bzw. dem Abstand Teilende - Teilmitte abhängig. Sie ist weiterhin auch von der Eingriffstiefe bzw. der Länge des Unterfahrens abhängig sowie von dem Teilematerial. Werden alle diese Parameter berücksichtigt, so kann eine notwendige Raumkurve berechnet werden.

Gemäß einer besonders bevorzugten Ausführungsform der Erfindung ist das nachgiebige Unterfahrelement als eine elastische, flexible, unter Vorspannung stehende und im Niederhalter angeordnete Zunge ausgebildet. Die Zunge befindet sich so lange im Niederhalter, bis ein Eingriffsspalt durch das Eindrücken des Niederhalters in den unteren Stapel geschaffen ist. Die elastische, flexible Zunge kann aus Kunststoff oder Metall bestehen. Sie ist aus dünnem Material angefertigt und weist an ihrem, der Unterfahrrichtung zugewandten Ende eine Bogenform auf. Diese Bogenform sorgt dafür, daß die Zunge im eingefahrenen Zustand, d.h. solange sie sich innerhalb des Niederhalters befindet, unter Vorspannung steht und beim Herausfahren aus dem Niederhalter einen Formschluß zu dem unteren Stapel durch ihre Entspannung bildet.

Eine andere Ausgestaltung des Unterfahrelementes betrifft eine starre Zunge, die elastisch im Niederhalter angeordnet ist. Diese Zunge steht im eingefahrenen Zustand ebenfalls unter Vorspannung, jedoch ist die Vorspannung nicht durch die Form und die Materialeigenschaften der Zunge, wie oben beschrieben, sondern durch die Wirkung einer Feder am Ende der Zungenanordnung im Niederhalter realisiert. Wird diese Zunge aus dem Niederhalter herausgefahren, so entspannt sich die Feder und bringt die Zunge in einen Formschluß zu den darunter befindlichen Teilen. Dabei kann durch geeignete Wahl des Zungenmaterials bzw. der Federkonstante und durch eine geeignete Anordnung der Zunge im Niederhalter eine definierte Vorspannung derselben erreicht werden, wodurch eine geeignete Elastizität der formschlüssigen Verbindung zu dem unteren Stapel bzw. ein definierter Druck auf die unteren Teile ermöglicht wird.

In Ausgestaltung sieht die Erfindung vor, daß eine starke Zunge mit einem nachgiebig gelagerten Distanzstück verbunden ist und dadurch ein nachgiebiges Unterfahrelement bildet.

Eine andere vorteilhafte Ausgestaltung ist dadurch realisiert, daß eine starre Zunge an einem starren Distanzstück angeordnet ist und mit diesem das Klemm-Mittel verbunden ist, und daß die so gebildete Einheit nachgiebig gelagert ist. Durch diese Ausgestaltung wird erreicht, daß eine geringe Abnutzung an der Zungenspitze auftritt, da der Einsatz eines starren Materials möglich ist.

In Ausgestaltung sieht die Erfindung vor, daß mindestens ein Abstreifer vorgesehen ist. Vorteilhaft ist, wenn zwei Abstreifer vorgesehen sind, welche seitlich des freizuhebenden Bündels angreifen. Sie greifen in dem Augenblick an, in dem das Sackbündel abgehoben wird und fixieren so den darunter liegenden Teilestapel. Dadurch wird das unbeabsichtigte Mitnehmen bzw. Verschieben des obersten Teiles des unteren Stapels verhindert.

Die Einrichtung weist Sensoren auf, welche die Stapelmuster erkennen und den Greifpunkt ermitteln. Diese Sensoren können als Ultraschallsensoren bzw. optische Sensoren ausgebildet sein.

Die Erfindung wird anhand eines Ausführungsbeispiels näher erläutert. Es zeigen:
- Fig. 1: eine Seitenansicht der erfindungsgemäßen Einrichtung;
- Fig. 2: eine schematische Darstellung der Aufnahme von einem Sackstapel in der Phase des Aufsetzens der Greifereinheit auf den unteren Sackstapel;
- Fig. 3: eine schematische Darstellung wie in Fig. 2, jedoch in der Phase des Untergreifens des zu hebenden Sackbündels;
- Fig. 4: eine Darstellung des Unterfahrmittels mit einer elastischen Zunge;
- Fig. 5: eine Darstellung einer starren, elastisch gelagerten Zunge;
- Fig. 6: eine Darstellung einer elastisch gelagerten Greifereinheit;
- Fig. 6a: eine andere Ausführungsform einer elastischen Greifereinheit;
- Fig. 7: eine Darstellung einer elastischen Zunge;
- Fig. 7a: eine andere Darstellung einer elastischen Zunge;

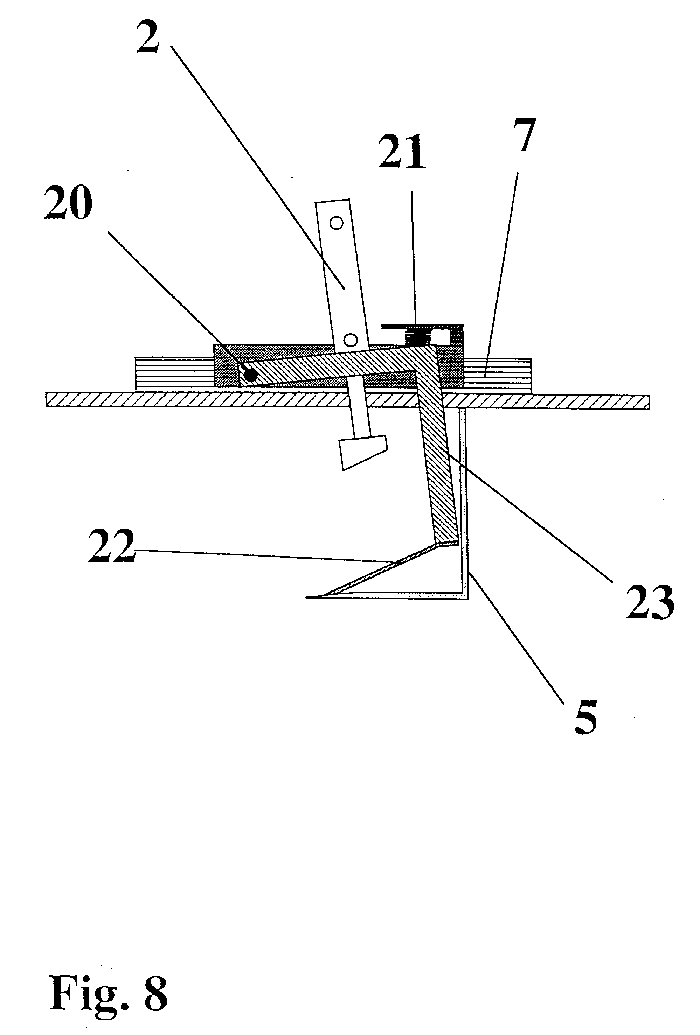

- Fig. 8: eine Darstellung einer elastisch gelagerten Klemm- und Unterfahreinheit mit einer starren Zunge;
- Fig. 9: unterschiedliche Möglichkeiten der versetzten Stapelung der Teile.

Die erfindungsgemäße Einrichtung weist Unterfahrmittel 1, Klemmzylinder 2, einen ersten Niederhalter 3, zwei Abstreifer 4 und einen zweiten Niederhalter 5 auf. Die Unterfahrmittel 1 bestehen aus einer ir dem zweiten Niederhalter 5 angeordneten elastischen Zunge 6. Der Klemmzylinder 2 wirkt mit der elastischen Zunge 6 zusammen. Die Greifereinheit 1, 2 ist auf einer Linearachse 7 verfahrbar und um eine Rotationsachse 8 drehbar. Der erste Niederhalter 3 und die Abstreifer 4 sind gemäß der dargestellten Ausführungsform durch Pneumatikzylinder gebildet.

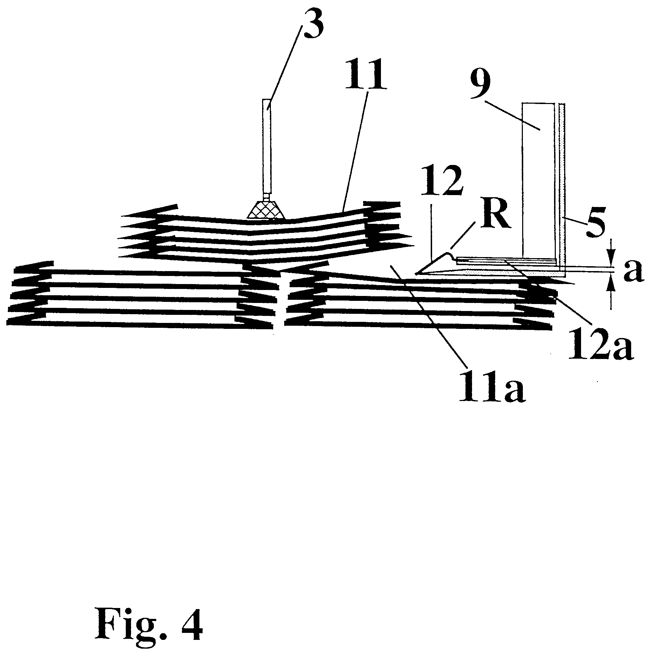

In Fig. 4 ist eine elastische, nachgiebige, in dem Niederhalter 5 verschiebbar angeordnete Zunge 12 dargestellt. Der Niederhalter 5 befindet sich auf dem unter dem zu hebenden Bündel 11 liegenden Teilestapel 10. Die flexible, nachgiebige Zunge 12 befindet sich während des Absenkvorganges und des Vorganges der Schaffung des Eingriffsspaltes 11 im zweiten Niederhalter 5. Sie ist darin unter Vorspannung angeordnet. Die Vorspannung ist abhängig von dem Abstand a zwischen dem Zungenträger 12a und der inneren Fläche des zweiten Niederhalters 5, von dem Material der Zunge 12 und von dem Radius R des Zungenbogens.

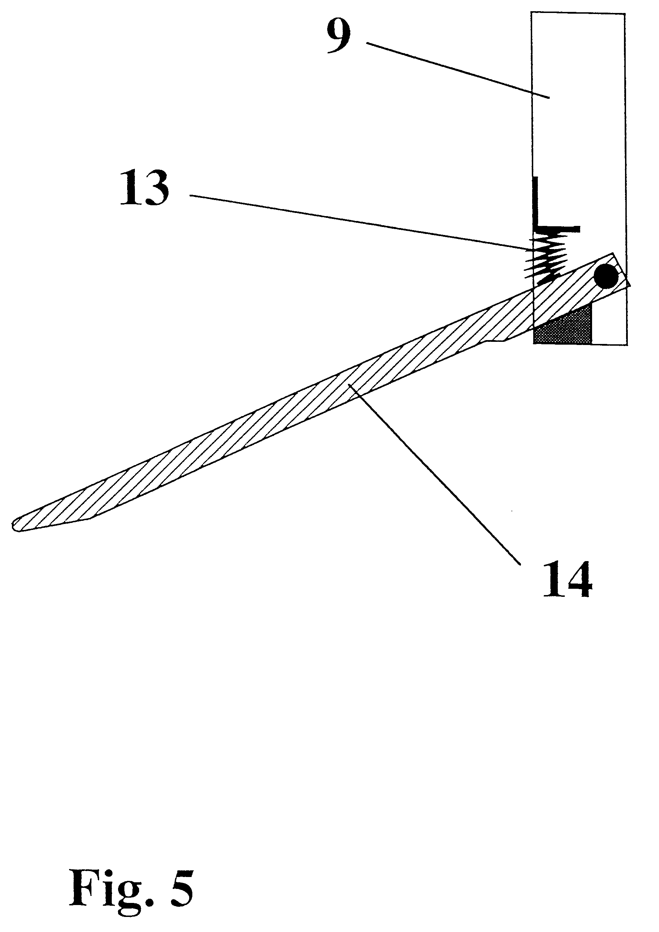

Eine andere Ausführungsform der Zunge ist in Fig. 5 dargestellt. Dabei handelt es sich um eine starre Zunge 14, welche elastisch mittels Feder 13 im Distanzstück 9 gelagert ist. Die Vorspannung dieser Zunge 14 wird durch die Wahl der Federvorspannung und durch die Wahl der Federkonstante realisiert.

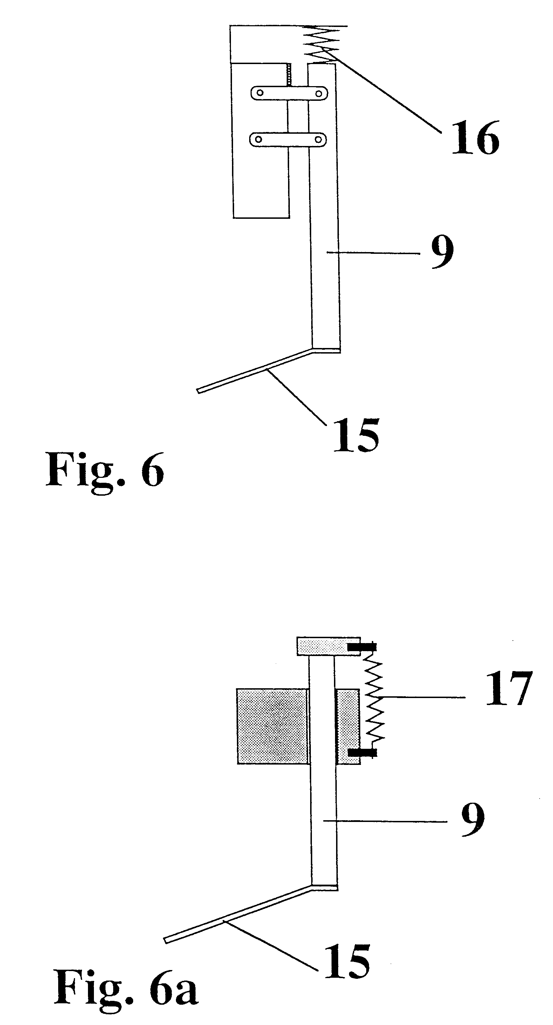

In den Fig. 6 und 6a sind Ausführungsformen dargestellt, bei denen das Distanzstück 9 und die Zunge 15 elastisch gelagert sind, wobei die Zunge 15 selbst und die Verbindung mit dem Distanzstück 9 starr sind. Die elastische Lagerung des Unterfahrmittels ist entweder durch eine Druckfeder 16 oder durch eine Zugfeder 17 realisiert.

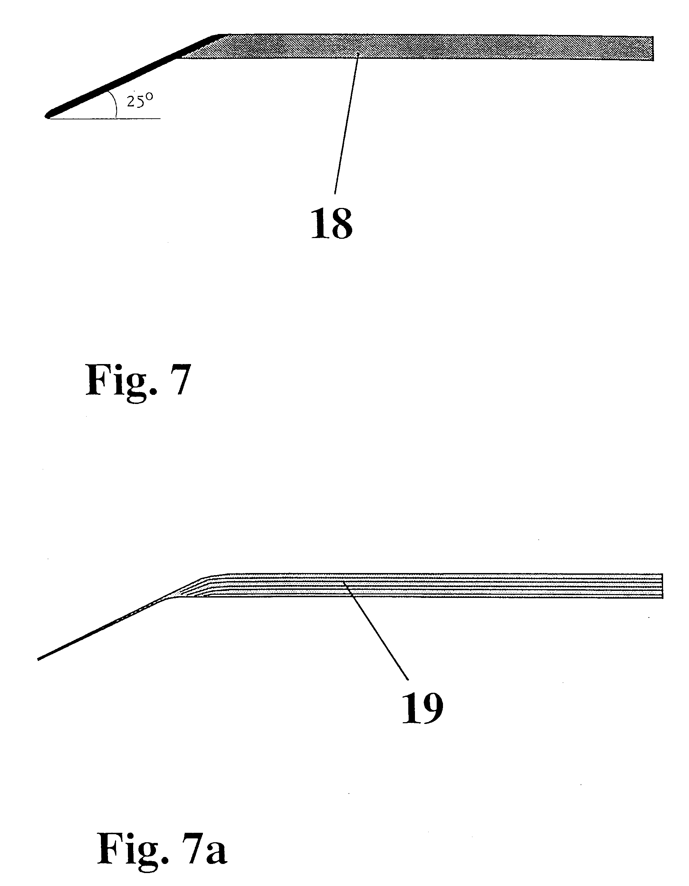

Verschiedene Ausführungsformen einer teilflexiblen Zunge 18, 19 sind in den Fig. 7 und 7a dargestellt. Sie entsprechen von der Grundkonzeption der Zunge 12/12a in Fig. 4, wobei diese die Vorzugsform darstellt. Die in Fig. 7 dargestellte Zunge 18 ist im Klemmbereich aus Aluminium hergestellt und besitzt im flexiblen Bereich einen schrägen PVC-Einsatz. Der schräge Einsatz verläuft unter einem Winkel von 25°. Die Konstruktion der flexiblen Zunge 19, welche in Fig. 7a dargestellt ist, ist ähnlich, diese Zunge 19 ist jedoch aus faserverstärktem Kunststoff hergestellt, wobei die elastische Spitze aus besonders dünnem Material besteht.

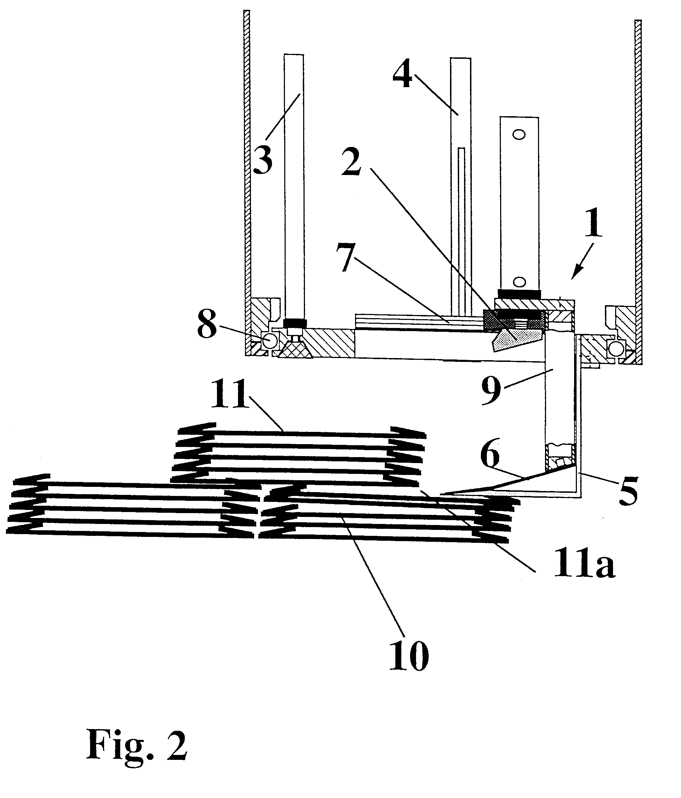

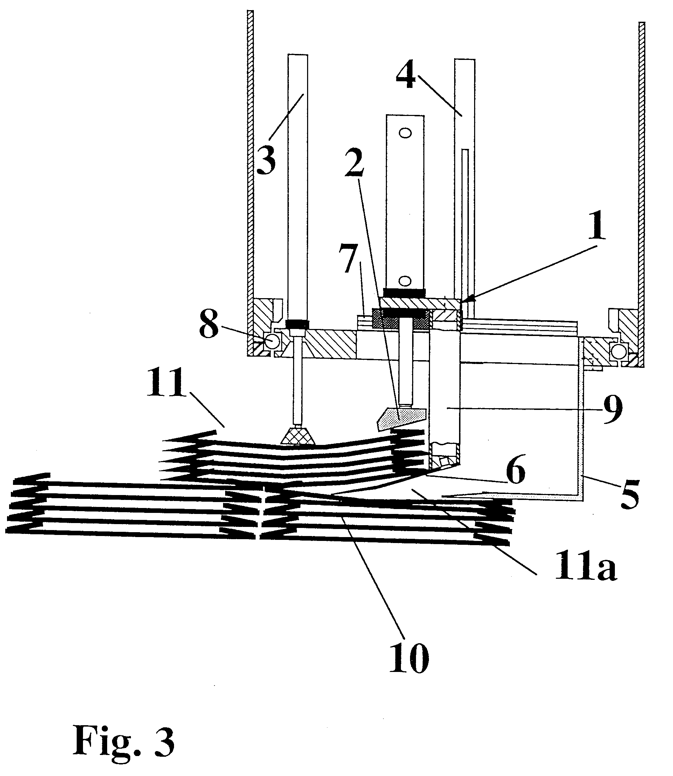

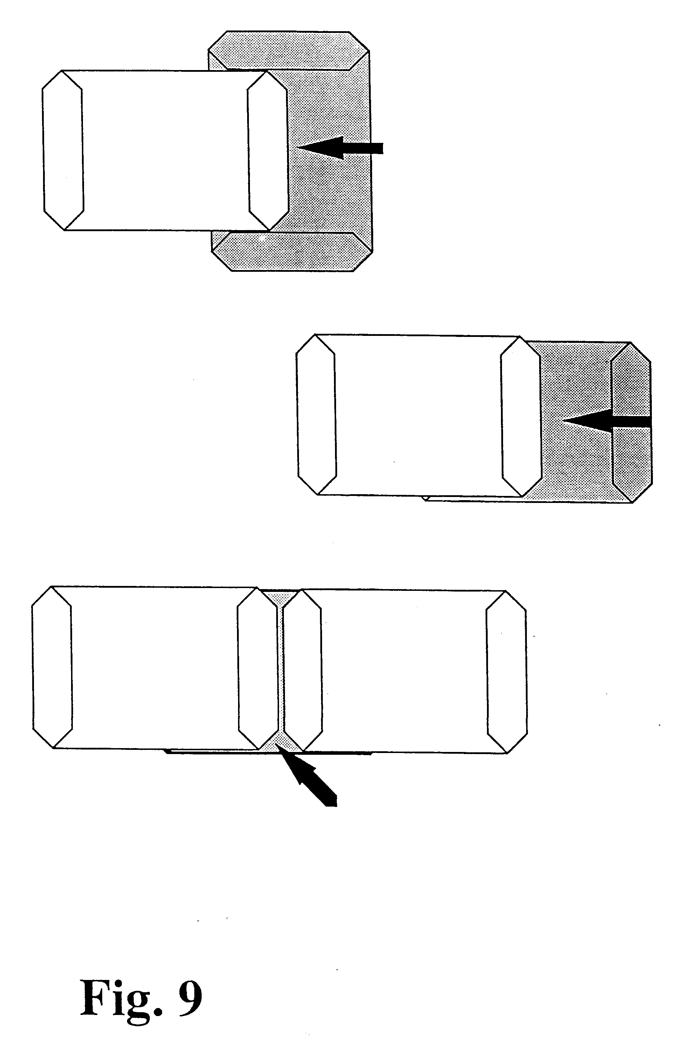

Eine genauere Darstellung des Depalettier- bzw. Aufnahmevorganges eines Sackstapels 11 ist in den Fig. 2 und 3 dargestellt. Das zu greifende Sackbündel 11 und dessen genauer Greifpunkt wird zunächst mittels nicht dargestellten Sensoren ermittelt. Die Greifereinheit 1, 2 fährt die Greifposition an und setzt den zweiten Niederhalter 5 auf den unteren Sackstapel 10 auf. Dadurch wird der untere Sackstapel 10 in seiner Position fixiert und die Eingriffsöffnung 11a für das Unterfahrelement 6 geschaffen. Als nächstes fährt der erste Niederhalter 3 aus und sichert so das zu depalettierende Sackbündel 11 für den weiteren Greifvorgang. Durch diese Maßnahme wird gleichzeitig der Eingriffsspalt 11a weiter geöffnet. Jetzt kann die im zweiten Niederhalter 5 ruhende und vorgespannte Zunge 6 unter das zu greifende Sackbündel 11 geschoben werden, indem sie aus der Linearführung 7 in Richtung des Sackbündels 11 bewegt wird. Sobald das Bündel 11 genügend unterfahren ist, wird es durch den Klemmzylinder 2 gegen die Zunge 6 geklemmt und so kraftschlüssig mit dem Greifer verbunden. Der erste Niederhalter 3 wird jetzt eingefahren und die beiden Abstreifer 4 ausgefahren. Sie dienen dazu, evtl. mögliche Verhakungen der Zunge 6 mit Bodenblättern von Säcken des unteren Stapels 10, die nicht zum zu depalettierenden Bündel 11 gehören, während des senkrechten Hochfahrens des Gesamtsystems aufzulösen. Das Gesamtsystem mit dem in der Greifereinheit 1, 2 geklemmten Sackbündel 11 fährt nun etwa senkrecht nach oben, bis die Abstreifer 4 den Kontakt zu den darunter liegenden Säcken verloren und sich eventuelle Verhakungen gelöst haben. Nachfolgend werden die Abstreifer 4 eingefahren. Das Gesamtsystem beschreibt während des nun folgenden Hebevorganges eine Raumkurve um das freie Ende des gegriffenen Sackbündels 11. Hierdurch werden Relativbewegungen zwischen dem gegriffenen Sackbündel 9 und dem darunter befindlichen Sackstapel 10 vermieden, die zu Störungen des Stapelmusters führen können. Das Sackbündel 11 ist nun freigehoben und wird, frei an der Greifereinheit 1, 2 hängend, weiter zur Ablageposition transportiert. Bei allen Depalettier- und Aufnahmevorgängen mittels der erfindungsgemäßen Vorrichtung ist es vorteilhaft, wenn die Stapelung der Teile gemäß Fig. 9 versetzt ist.

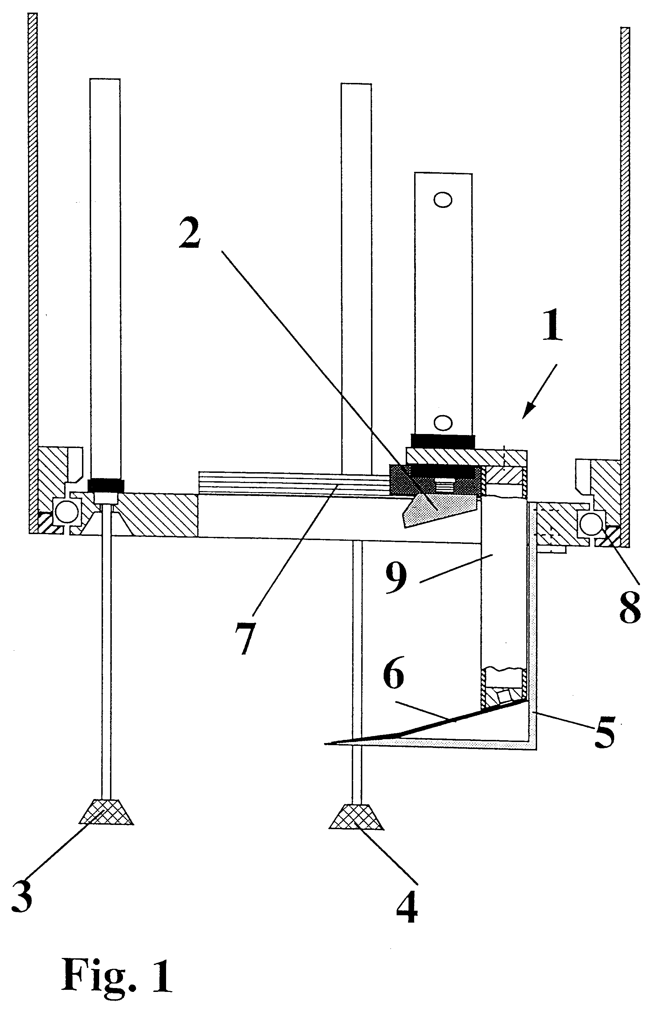

Der in Fig. 1 dargestellte Greifer ist am Außenmantel starr mit einem Handhabungssystem verbunden. Wenn der Greifer entsprechend Fig. 2 mit dem zweiten Niederhalter 5 auf dem Sackbündel 10 vom Handhabungssystem aufgesetzt worden ist, werden Unterfahr- und Klemmittel hilfsmotorisch linear bewegt, während das Handhabungssystem bis zum Ende des Greifprozesses in Ruhe ist.

Gemäß einer anderen Ausgestaltung ist der Greifer mit Unterfahrmittel und Klemmelement am Handhabungssystem befestigt, besitzt keine Rotationsachse 8 (diese ist im Handhabungssystem integriert) und setzt in einer Fig. 1 entsprechenden Ausgangsstellung auf dem Bündel 10 auf. Durch den Andruck der Niederhalter 3 und 5 wird die Greifergrundplatte mit den Niederhaltern relativ zu den Bündeln 10 und 11 fixiert (Haftreibung). Statt einer hilfsmotorischen Bewebung von Unterfahrmittel und Klemmelement schiebt das Handhabungssystem diese Elemente nun unter das zu depalettierende Bündel und übernimmt damit die Funktion der Hilfsmotorik.

## Patentansprüche

1. Einrichtung zum Depalettieren und/oder Aufnahme von biegeschlaffen flächigen, insbesondere aufeinander versetzt gestapelten Teilen, insbesondere Säcken oder nicht mit Hilfsmitteln zusammengefaßten Sackbündeln, wobei die Anzahl der zu entnehmenden Teile durch die Palettierung vorgegeben ist, mit einer Greifereinheit (1, 2) mit einem ersten Niederhalter (3), einem Unterfahrmittel (1) und einem Klemmzylinder zum Greifen der aufzunehmenden Teile, **dadurch gekennzeichnet**, daß die Greifereinheit neben dem ersten Niederhalter (3), welcher auf die zu hebenden Teile (11) aufgesetzt wird, einen zweiten Niederhalter (5) aufweist, welcher auf die darunter liegenden Teile (10) formschlüssig aufgesetzt wird, so daß ein Eingriffsspalt (11a) für ein in dem zweiten Niederhalter (5) angeordnetes und zu diesem relativ bewegbares Unterfahrelement (6, 12, 14, 15, 18, 19) geschaffen wird, welches während des Unterfahrvorganges den Bereich des zweiten Niederhalters (5) verläßt und die Teile (11) unterfährt, wobei es sich während des gesamten Unterfahrvorganges in einer formschlüssigen Verbindung zu den unteren Teilen (10) befindet und daß der nach dem Unterfahrvorgang auf die zu hebenden Teile aufsetzbarer Klemmzylinder (2) zusammen mit dem Unterfahrelement (6, 12, 14, 15, 18, 19) die Teile (10) greift und aufnimmt.

2. Einrichtung nach Anspruch 1, **dadurch gekennzeichnet**, daß die Greifereinheit (1, 2) nach dem Greifvorgang eine Raumkurve um das freie Ende des gegriffenen Sackbündels (11) beschreibt, um Relativbewegungen zwischen dem gegriffenen Teil (11) und dem darunter liegenden Stapel (10) zu vermeiden.

3. Einrichtung nach Anspruch 1 oder 2, **dadurch gekennzeichnet**, daß das nachgiebige Unterfahrelement als eine teilelastische, flexible, unter Vorspannung im Niederhalter (5) gehaltene Zunge (6, 12, 12a, 18, 19) ausgebildet ist.

4. Einrichtung nach einem der vorangegangenen Ansprüche, **dadurch gekennzeichnet**, daß das nachgiebige Unterfahrelement als eine, mit einem nachgiebig gelagerten Distanzstück (9) starre Zunge (15) ausgebildet ist.

5. Einrichtung nach Anspruch 1 oder 2, **dadurch gekennzeichnet**, daß das Unterfahrelement aus einer an einem starren Distanzstück (23) angeordneten starren Zunge (22) besteht und daß an dem Distanzstück (23) Klemm-Mittel (2) starr angeordnet sind und daß diese Einheit elastisch/nachgiebig gelagert ist.

6. Einrichtung nach einem oder mehreren der vorangegangenen Ansprüche, **dadurch gekennzeichnet**, daß mindestens ein in seitlichem Versatz zu der Greifereinheit (1, 2) angeordneter Abstreifer (4) für verhakte Teile (10, 11) vorgesehen ist.

7. Einrichtung nach Anspruch 6, **dadurch gekennzeichnet**, daß der Abstreifer (4) als Pneumatikzylinder ausgebildet ist.

8. Einrichtung nach einem oder mehreren der vorangegangenen Ansprüche, **dadurch gekennzeichnet**, daß Sensoren vorgesehen sind, welche die Stapelmuster erkennen und den Greifpunkt ermitteln.

## Claims

1. Apparatus for depalletising and/or picking up flexurally limp flat parts, more particularly bags or bundles of bags not held together by additional means, such parts being more particularly stacked on one another in a staggered arrangement, the number of parts to be removed being predetermined by the palletisation, comprising a gripper unit (1, 2) having a first holddown means (3), an under-run means (1), and a clamping cylinder for gripping the parts to be picked up, characterised in that in addition to the first holddown means (3) which is placed on the parts (11) for lifting, the gripper unit comprises a second hold-down means (5) which is placed positively on the parts (10) therebeneath so that an engagement gap (11a) is created for an under-run element (6, 12, 14, 15, 18, 19) which is disposed in and is movable relatively to the second hold-down means (5), said element (6, 12, 14, 15, 18, 19) leaving the area of the second hold-down means (5) and running beneath the parts (11) during the under-run operation, said element being positively connected to the bottom parts (10) during the entire under-run operation and in that the clamping cylinder (2), which is adapted to be placed on the parts for lifting after the under-run operation, together with the under-run element (6, 12, 14, 15, 18, 19), engages and picks up the parts (10).

2. Apparatus according to claim 1, characterised in that after the gripping operation the gripper unit (1, 2) describes a spatial curve about the free end of the gripped bundle of bags (11) in order to avoid relative movements between the gripped part (11) and the stack (10) therebeneath.

3. Apparatus according to claim 1 or 2, characterised in that the resilient under-run element is constructed as a partially elastic flexible tongue (6, 12, 12a, 18, 19) which is kept under prestressing in the hold-down means (5).

4. Apparatus according to any one of the preceding claims, characterised in that the resilient under-run element is constructed as a rigid tongue (15) having a resiliently mounted spacer (9).

5. Apparatus according to claim 1 or 2, characterised in that the under-run element consists of a rigid tongue (22) disposed on a rigid spacer (23) and in that clamping means (2) are rigidly disposed on the spacer (23) and in that this unit is mounted elastically/resiliently.

6. Apparatus according to one or more of the preceding claims, characterised in that at least one stripper (4) for caught parts (10, 11) is provided, such stripper being disposed in lateral offset relationship to the gripper unit (1, 2).

7. Apparatus according to claim 6, characterised in that the stripper (4) is constructed as a pneumatic cylinder.

8. Apparatus according to one or more of the preceding claims, characterised in that sensors are provided which detect the stack pattern and determine the gripping point.

## Revendications

1. Installation pour dépalettiser et/ou enlever des articles plats, souples, empilés notamment de manière décalée, en particulier des sacs ou des paquets de sacs non réunis par des moyens de liaison, le nombre des articles à prendre étant prédéterminé par la palettisation, à l'aide d'une unité de prise (1, 2) comportant un premier organe d'enfoncement (3), un moyen de passage en dessous (1) et un cylindre de serrage pour prendre les articles à enlever, installation caractérisée en ce que l'unité de prise comporte en plus du premier organe d'enfoncement (3) qui est mis sur les articles à enlever (11), un second organe d'enfoncement (5) qui est mis par une liaison par la forme sur les pièces (10) se trouvant en dessous de façon à créer un intervalle de prise (11a) pour un élément de pénétration (6, 12, 14, 15, 18, 19) équipant le second organe d'enfoncement (5) et mobile par rapport à celui-ci, cet organe quittant la zone du second organe d'enfoncement (5) pendant la phase de pénétration en dessous et passe sous les articles (11), et pendant toute la phase de pénétration, il se trouve dans une liaison par la forme avec les articles inférieurs (10) et après la phase de pénétration le cylindre de pincement (2) appliqué sur les articles à soulever ensemble avec l'élément de pénétration (6, 12, 14, 15, 18, 19) prend les articles et les saisissent.

2. Installation selon la revendication 1, caractérisée en ce que l'unité de prise (1, 2) décrit après la phase de prise, une courbe dans l'espace autour de l'extrémité libre du paquet de sacs (11) enlevé, pour éviter tout mouvement relatif entre la partie enlevée (11) et la pile (10) qui se trouve en dessous.

3. Installation selon la revendication 1 ou 2, caractérisée en ce que l'élément de pénétration, souple est une languette (6, 12, 12a, 18, 19) partiellement élastique, souple, montée avec précontrainte sur l'organe d'enfoncement (5).

4. Installation selon l'une des revendications précédentes, caractérisée en ce que l'élément de pénétration souple est une languette rigide (15) montée de manière souple avec la pièce d'écartement (9).

5. Installation selon la revendication 1 ou 2, caractérisée en ce que l'élément de pénétration se compose d'une languette (22) montée rigide sur une pièce rigide d'écartement (23), et des moyens de serrage (2) sont montés de manière rigide sur la pièce d'écartement (23) et cet ensemble est monté de manière élastiquement souple.

6. Installation selon une ou plusieurs des revendications précédentes, caractérisée en ce qu'au moins un organe de raclage (4) décalé latéralement par rapport à l'unité de prise (1, 2) est prévu, pour les articles (10, 11) qui se seraient accrochés.

7. Installation selon la revendication 6, caractérisée en ce que l'organe de raclage (4) est un vérin pneumatique.

8. Installation selon une ou plusieurs des revendications précédentes, caractérisée par des capteurs qui détectent le modèle de pile et déterminent le point de prise.
